# EUROPEAN PATENT APPLICATION

(11) **EP 4 668 391 A1**
(43) Date of publication of application: **24.12.2025**
(21) Application number: 25178242.1
(22) Date of filing: 22.05.2025
(51) Int. Cl.: H01M 10/04, H01M 10/613, H01M 10/625, H01M 10/647, H01M 10/6556, H01M 10/6568, H01M 50/209, H01M 50/249, H01M 50/291, H01M 50/296, H01M 50/507

(54) **BATTERY ASSEMBLY AND BATTERY PACK**

(30) Priority: 17.06.2024 JP 2024097291
(71) Applicant: Prime Planet Energy & Solutions, Inc., Chuo-ku, Tokyo 103-0022 (JP)
(72) Inventor: TERAUCHI, Shinobu, Tokyo, 103-0022 (JP)
(74) Representative: Kuhnen & Wacker Patent- und Rechtsanwaltsbüro PartG mbB

(57) **Abstract**

A battery assembly (1) includes: a plurality of battery cells (10) arranged in a first direction; and a restraint member (100, 200) that restrains the plurality of battery cells (10) in the first direction, wherein each of the plurality of battery cells (10) has an electrode terminal (11) on at least one side in a second direction orthogonal to the first direction, the restraint member (100, 200) includes a pair of members (100, 200) provided to sandwich the plurality of battery cells (10) in the second direction, and the pair of members (100, 200) are provided to be separated from each other in the second direction.

## Description

### CROSS REFERENCE TO RELATED APPLICATIONS

This nonprovisional application is based on Japanese Patent Application No. 2024-097291 filed on June 17, 2024 with the Japan Patent Office, the entire contents of which are hereby incorporated by reference.

### BACKGROUND OF THE INVENTION

### Field of the Invention

The present technology relates to a battery assembly and a battery pack.

### Description of the Background Art

There has been conventionally known a battery assembly in which a plurality of battery cells are restrained in a direction in which the plurality of battery cells are arranged. Examples of such a conventional battery assembly include those described in WO 2019/130937 and Chinese Utility Model No. 212303803.

### SUMMARY OF THE INVENTION

In the battery assembly in which the plurality of battery cells are restrained, it has been required to readily replace an individual battery cell. From another viewpoint, it has been required to suppress an excessive increase in moment load exerted on a restraint member in the battery assembly in which the plurality of battery cells are restrained.

It is one object of the present technology to provide: a battery assembly in which an individual battery cell can be readily replaced; and a battery pack including the battery assembly.

From a viewpoint different from the above, it is another object of the present technology to provide: a battery assembly in which an excessive increase in moment load exerted on a restraint member can be suppressed; and a battery pack including the battery module.

The present technology provides the following battery assembly and the following battery pack.
[1] A battery assembly comprising: a plurality of battery cells arranged in a first direction; and a restraint member that restrains the plurality of battery cells in the first direction, wherein each of the plurality of battery cells has an electrode terminal on at least one side in a second direction orthogonal to the first direction, the restraint member includes a pair of members provided to sandwich the plurality of battery cells in the second direction, and the pair of members are provided to be separated from each other in the second direction.
[2] A battery assembly comprising: a plurality of battery cells arranged in a first direction; and a restraint member that restrains the plurality of battery cells in the first direction, wherein each of the plurality of battery cells has a rectangular shape with a short-side direction corresponding to a second direction orthogonal to the first direction and a long-side direction corresponding to a third direction orthogonal to the first direction and the second direction when viewed in the first direction, and the restraint member includes a pair of members provided to sandwich the plurality of battery cells in the second direction.
[3] The battery assembly according to [1] or [2], further comprising an end plate provided at each of respective end portions of a stack of the plurality of battery cells in the first direction.
[4] The battery assembly according to [3], further comprising an elastic mechanism provided between the restraint member and the end plate.
[5] The battery assembly according to any one of [1] to [4], further comprising a bus bar that electrically connects the plurality of battery cells, wherein the bus bar electrically connects the plurality of battery cells in a state in which the bus bar is fixed to the restraint member and is not fixed to the plurality of battery cells.
[6] The battery assembly according to any one of [1] to [5], further comprising a cooling member composed of a resin and provided in direct abutment with the plurality of battery cells, wherein the cooling member is provided between the restraint member and each of the plurality of battery cells.
[7] The battery assembly according to [6], wherein a coolant path is provided in the cooling member, and an inflow portion and an outflow portion for a coolant in the coolant path are disposed between the pair of members.
[8] A battery pack comprising: the battery assembly according to any one of [1] to [7].

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is an overall perspective view showing a configuration of a battery module according to an embodiment.
Fig. 2 is an exploded perspective view showing the configuration of the battery module according to the embodiment.
Fig. 3 is an exploded side view showing the configuration of the battery module according to the embodiment.
Fig. 4 is a perspective view showing a configuration of a battery cell according to the embodiment.
Fig. 5 is a cross sectional view taken along a line V-V in Fig. 1.
Fig. 6 is a cross sectional view corresponding to a region surrounded as VI in Fig. 5.
Fig. 7 is an enlarged view of a region surrounded as VII in Fig. 5.
Fig. 8 is a perspective view showing a configuration of a collective terminal base according to the embodiment.
Fig. 9 is a perspective view showing the configuration of the collective terminal base in a state in which a first binding bar and a second binding bar are detached from the battery module in Fig. 8.
Fig. 10 is a cross sectional view taken along a line X-X in Fig. 8 (cross section extending through collective terminal base 600).
Fig. 11 is a cross sectional view taken along a line XI-XI in Fig. 8 (cross section extending through retainers 1110, 1120).
Fig. 12 is a cross sectional view taken along a line XII-XII in Fig. 8 (cross section extending through guide members 1210, 1220).

### DESCRIPTION OF THE PREFERRED EMBODIMENTS

Hereinafter, embodiments of the present technology will be described. It should be noted that the same or corresponding portions are denoted by the same reference characters, and may not be described repeatedly.

In the embodiments described below, when reference is made to number, amount, and the like, the scope of the present technology is not necessarily limited to the number, amount, and the like unless otherwise stated particularly. In the embodiments described below, each component is not necessarily essential to the present technology unless otherwise stated particularly. The present technology is not limited to one that necessarily exhibits all the functions and effects stated in the present embodiment.

In the present specification, the terms "comprise", "include", and "have" are open-end terms. That is, when a certain configuration is included, a configuration other than the foregoing configuration may or may not be included.

In the present specification, when geometric terms and terms representing positional/directional relations are used, for example, when terms such as "parallel", "orthogonal", "obliquely at 45°", "coaxial", and "along" are used, these terms permit manufacturing errors or slight fluctuations. In the present specification, when terms representing relative positional relations such as "upper side" and "lower side" are used, each of these terms is used to indicate a relative positional relation in one state, and the relative positional relation may be reversed or turned at any angle in accordance with an installation direction of each mechanism (for example, the entire mechanism is reversed upside down).

In the present specification, the term "battery" is not limited to a lithium ion battery, and may include other battery packs such as a nickel-metal hydride battery and a sodium-ion battery. In the present specification, the term "electrode" may collectively represent a positive electrode and a negative electrode. A "battery pack" is used as a power supply for driving a vehicle such as a hybrid electric vehicle (HEV), a plug-in hybrid electric vehicle (PHEV), or a battery electric vehicle (BEV). It should be noted that the use of the "battery" or "battery pack" is not limited to the use in a vehicle. Each of the "battery" and the "battery pack" can be used in, for example, a stationary power storage facility.

In each of the figures, the stacking direction of battery cells 10 included in a battery module 1 is defined as a Y direction. The Y direction coincides with the thickness direction of each of battery cells 10. The height direction of battery module 1 is defined as a Z direction. The Z direction coincides with the height direction of battery cell 10. The width direction of battery module 1 is defined as an X direction. The X direction coincides with the width direction of battery cell 10. The X direction, the Y direction, and the Z direction are substantially orthogonal to one another.

In order to facilitate understanding of the invention, the size of each configuration in the figures is illustrated to be changed from its actual size. For convenience of description, in accordance with arrangement relations in the figures, side surfaces of battery module 1 orthogonal to the Y direction may be referred to as "short side surfaces" of battery module 1, surfaces of battery module 1 orthogonal to the Z direction may be referred to as an "upper side surface" and a "lower side surface" of battery module 1, and side surfaces of battery module 1 orthogonal to the X direction may be referred to as "long side surfaces" of battery module 1.

### (Battery Module 1)

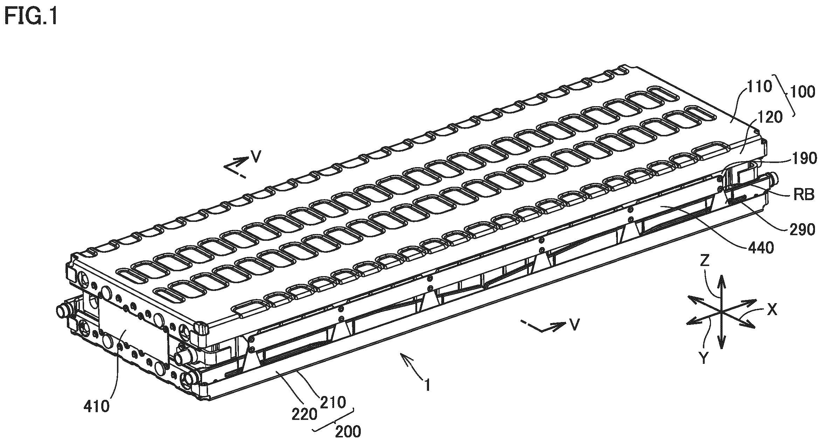

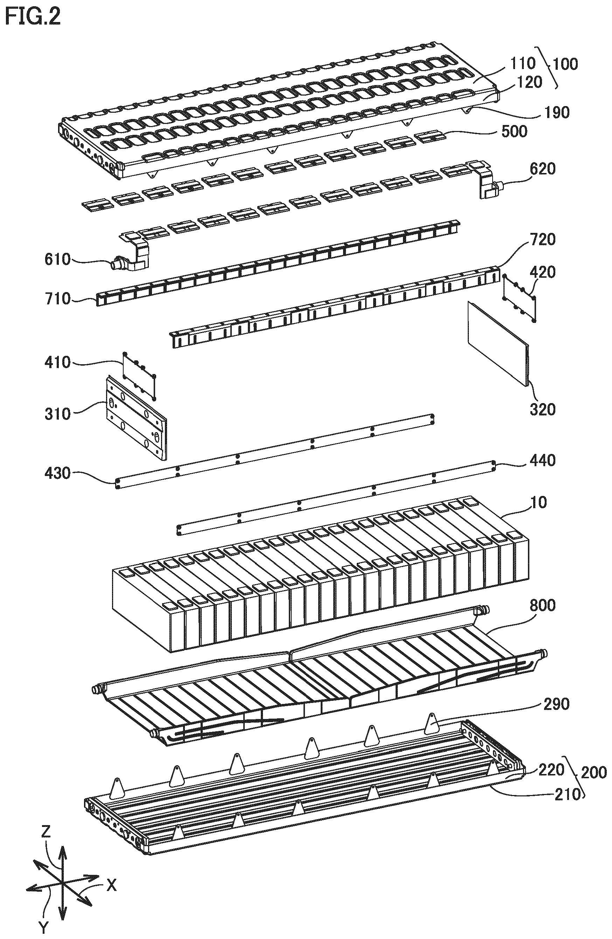

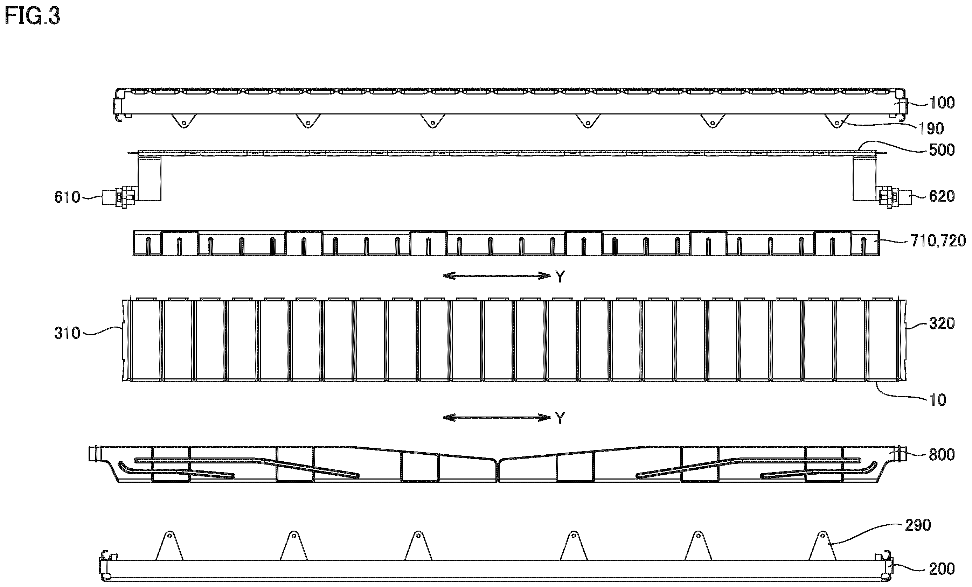

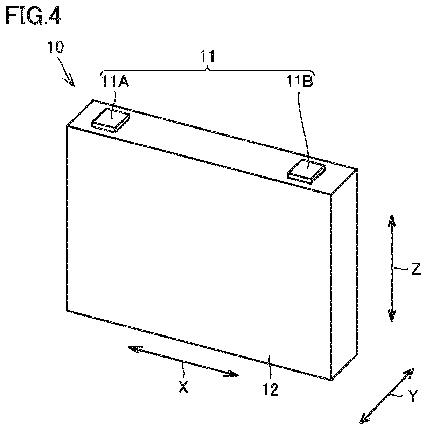

A configuration of battery module 1 according to the present embodiment will be described with reference to Figs. 1 to 4. Fig. 1 is an overall perspective view showing the configuration of battery module 1, Fig. 2 is an exploded perspective view showing the configuration of battery module 1, Fig. 3 is an exploded side view showing the configuration of battery module 1, and Fig. 4 is a perspective view showing a configuration of each battery cell 10.

The configuration of battery module 1 will be described with reference to Figs. 1 to 4. Battery module 1 includes a first binding bar 100, bus bars 500, a first collective terminal base 610, a second collective terminal base 620, a first cushion 710, a second cushion 720, a first end plate 310, a second end plate 320, a first coupling plate 410, a second coupling plate 420, a third coupling plate 430, a fourth coupling plate 440, a plurality of battery cells 10, a cooling device 800, and a second binding bar 200.

A battery pack is obtained by accommodating battery module 1 in a pack case (not shown).

On an inner surface of each of first binding bar 100 and second binding bar 200, a restraint force generation mechanism using an elastic member is provided in order to generate restraint force in each of battery cells 10 in the stacking direction (Y direction) of stacked battery cells 10, but is not shown here.

The plurality of battery cells 10 are stacked in the thickness direction (Y direction) of each of battery cells 10, and in the present embodiment, 24 battery cells 10 are stacked. The number of battery cells 10 is appropriately selected and is not limited to 24.

First end plate 310 and second end plate 320 are disposed at respective end portions of the stack of battery cells 10, and in a state in which battery cells 10 are accommodated in battery module 1, battery cells 10 stacked are pressed from the short side surface sides of battery module 1 by first end plate 310 and second end plate 320, and are restrained between first end plate 310 and second end plate 320.

Referring to Fig. 4, each of battery cells 10 has a rectangular parallelepiped appearance having a flat surface shape. Electrode terminals 11 include a positive electrode terminal 11A and a negative electrode terminal 11B. Electrode terminals 11 are provided on the upper surface of a housing 12 having a prismatic shape. An electrode assembly (not shown) and an electrolyte solution (not shown) are accommodated in housing 12. The thickness direction of battery cell 10 corresponds to the Y direction, the height direction of battery cell 10 corresponds to the Z direction, and the width direction of battery cell 10 corresponds to the X direction. In the state in which battery cells 10 are accommodated in battery module 1, positive electrode terminals 11A and negative electrode terminals 11B of battery cells 10 are alternately disposed along the Y direction.

Referring again to Figs. 1 to 3, bus bars 500 are used for electric joining with positive electrode terminals 11A and negative electrode terminals 11B of adjacent battery cells 10. In the present embodiment, for the electric joining between each bus bar 500 and each electrode terminal 11 (positive electrode terminal 11A and negative electrode terminal 11B), a contact connection structure in which bus bar 500 and electrode terminal 11 are only in abutment with each other is employed, rather than a fixed connection structure using welding or the like.

The plurality of bus bars 500 are fixed in advance at predetermined positions on the inner surface of first binding bar 100 located on the side covering electrode terminals 11 of battery cell 10. With this configuration, each bus bar 500 and each electrode terminal 11 are not fixed to each other, and battery cells 10 stacked can be therefore slid in the Y direction, i.e., the stacking direction of battery cells 10 in the state in which battery cells 10 are accommodated in battery module 1.

First collective terminal base 610 for extracting power is provided at positive electrode terminal 11A or negative electrode terminal 11B of battery cell 10 that is in contact with first end plate 310. Similarly, second collective terminal base 620 for extracting power is provided at positive electrode terminal 11A or negative electrode terminal 11B of battery cell 10 that is in contact with second end plate 320. Both first collective terminal base 610 and second collective terminal base 620 are located at the side surface end portions (both end portions in the Y direction) of battery module 1.

First binding bar 100 includes: a first main body plate portion 110 that covers stacked battery cells 10 from the electrode terminal 11 side (upper surface side in the figure); and a first peripheral wall portion 120 that extends to the second binding bar 200 side (lower side in the figure) on substantially the entire periphery of first main body plate portion 110. Second binding bar 200 includes: a second main body plate portion 210 that covers stacked battery cells 10 from a side surface (lower surface side in the figure) thereof opposite to electrode terminal 11; and a second peripheral wall portion 220 that extends to the first binding bar 100 side (upper side in the figure) on substantially the entire periphery of second main body plate portion 210.

First cushion 710 and second cushion 720 each extending in the stacking direction (Y direction) are disposed between first binding bar 100 and the upper corner portion of each of the plurality of stacked battery cells 10 on the upper side. Cooling device 800 composed of a resin and extending in the stacking direction (Y direction) is disposed between second binding bar 200 and the lower side of each of stacked battery cells 10.

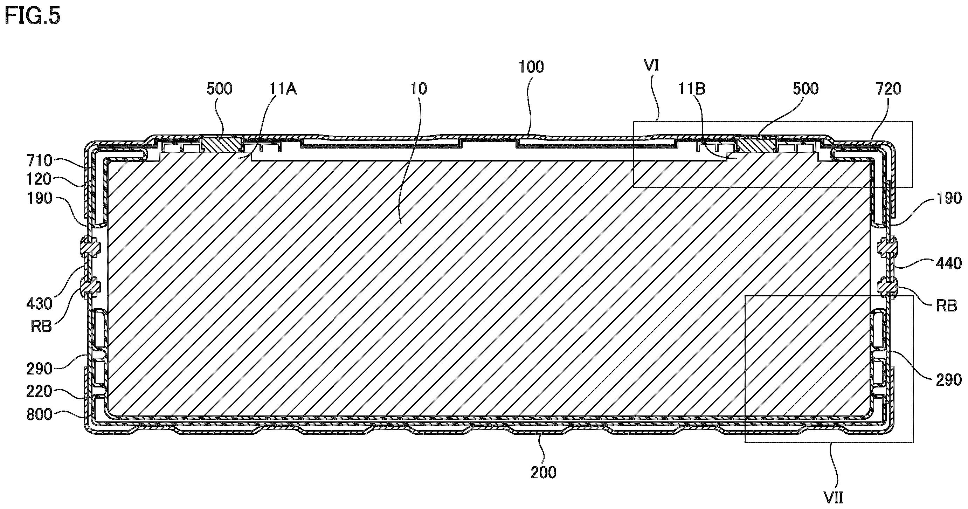

Regarding the fastening of first binding bar 100 and second binding bar 200, on the X direction side (long side surface side), a plurality of first extension plates 190 provided at first peripheral wall portion 120 of first binding bar 100 and a plurality of second extension plates 290 provided at second peripheral wall portion 220 of second binding bar 200 are fastened and fixed together via fourth coupling plate 440 (on the front side in the figure) by using rivets RB (see Fig. 5). Similarly, on the side opposite to the side shown in the figure, first extension plates 190 and second extension plates 290 are fastened and fixed together via third coupling plate 430 by using rivets RB.

On the Y direction side (short side surface side), first peripheral wall portion 120 and second peripheral wall portion 220 are fastened and fixed together by first coupling plate 410. Also on the side opposite to the side shown in the figure, first peripheral wall portion 120 and second peripheral wall portion 220 are fastened and fixed together by second coupling plate 420.

Battery cells 10 are restrained in the stacking direction (Y direction) of stacked battery cells 10 such that stacked battery cells 10 are slidable in the stacking direction (Y direction) by restraint force generation mechanisms respectively provided between first end plate 310 and first peripheral wall portion 120 of first binding bar 100, between first end plate 310 and second peripheral wall portion 220 of second binding bar 200, between second end plate 320 and first peripheral wall portion 120 of first binding bar 100, and between second end plate 320 and second peripheral wall portion 220 of second binding bar 200.

With the above configuration, even when a battery cell 10 is expanded, bus bar 500 and electrode terminal 11 are slid in contact with each other while maintaining the state in which they are in contact with each other. Thus, the movement of battery cell 10 due to the expansion can be absorbed in battery module 1 while maintaining the electric connection and maintaining the restraint state of each of battery cells 10 in the stacking direction.

### (Bus Bar 500)

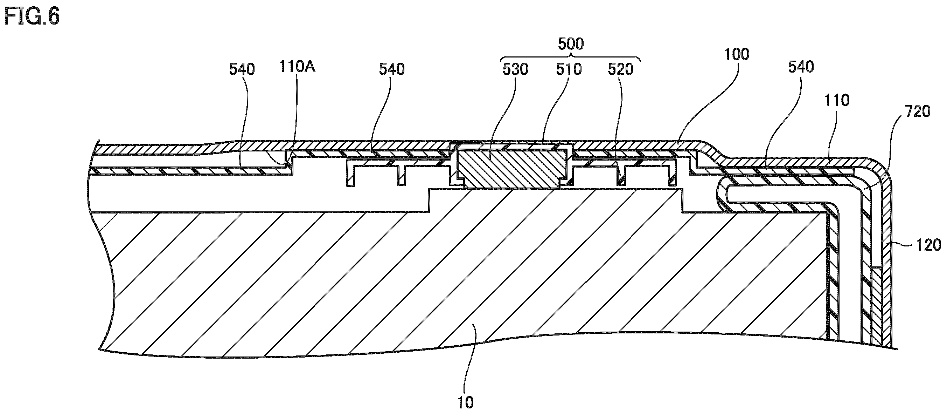

Next, pressing of bus bars 500 against electrode terminals 11 by using first binding bar 100 and second binding bar 200 will be described with reference to Figs. 5 and 6. Fig. 5 is a cross sectional view taken along a line V-V in Fig. 1, and Fig. 6 is a cross sectional view corresponding to a region surrounded as VI in Fig. 5.

Referring to Fig. 5, first extension plates 190 provided at first peripheral wall portion 120 and second extension plates 290 provided at second peripheral wall portion 220 are fastened and fixed to third coupling plate 430 (on the left side of the shown cross section) and fourth coupling plate 440 (on the right side of the shown cross section) by using rivets RB. On this occasion, first binding bar 100 and second binding bar 200 are fixed in the state in which the external forces for bringing them closer to each other are applied thereto. As a result, a force for pressing bus bar 500 from first binding bar 100 to the electrode terminal 11 side is generated.

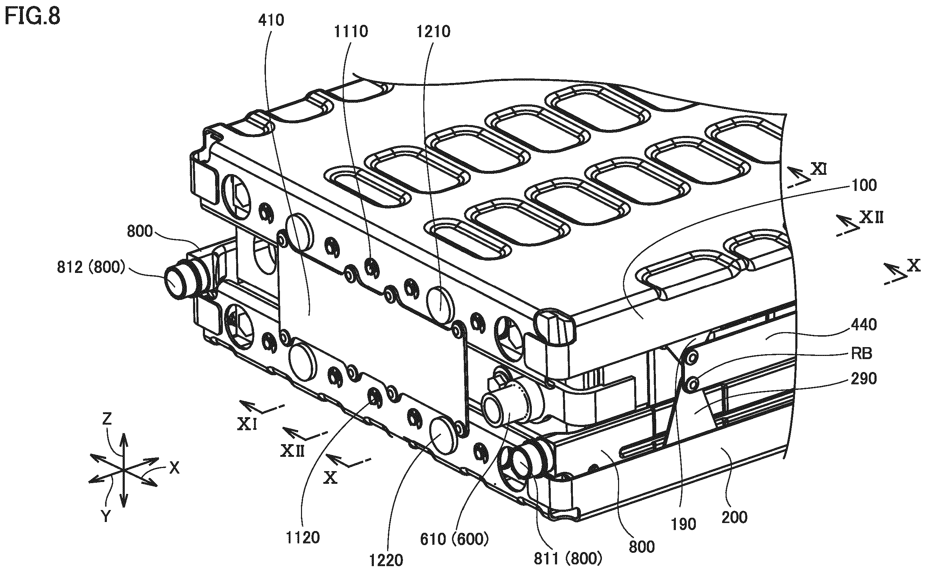

First peripheral wall portion 120 and second peripheral wall portion 220 are coupled together also by first coupling plate 410 disposed at the side surface end portion (end portion in the Y direction) of battery module 1, and first peripheral wall portion 120 and second peripheral wall portion 220 are coupled together also by second coupling plate 420 (see Figs. 1 and 8).

As shown in Fig. 6, an insulating sheet 540 composed of a resin may be provided between a base portion 510 of bus bar 500 and an inner surface 110A of first binding bar 100 so as to cover the side (upper side) of each battery cell 10 on which electrode terminal 11 is provided. Thus, insulation performance between first binding bar 100 and battery cell 10 can be improved.

On the rear surface side of base portion 510, ribs 520 and groove portions are provided in the form of a lattice in order to attain a reduced weight of bus bar 500 and secure rigidity of base portion 510.

As described above, by fixing bus bar 500 to inner surface 110A of first binding bar 100 in advance so as to form first binding bar 100 and bus bar 500 into an integral structure, the height of battery module 1 in the Z direction can be low.

Further, another member to support bus bar 500 does not need to be employed, thereby attaining a reduced number of components. Further, since the plurality of stacked battery cells 10 can be restrained by using the whole of first binding bar 100 and the whole of second binding bar 200, it is expected that the material strength of the member for restraining battery cells 10 can be reduced while increasing the restraint force for each of battery cells 10.

Furthermore, since carbon is used for a bus bar terminal 530 of bus bar 500, electric connection between bus bar terminal 530 and electrode terminal 11 of each of battery cells 10 can be maintained while securing electric conductivity, heat resistance, and contact slidability therebetween, and the movement of battery cell 10 due to the expansion can be absorbed in battery module 1 while maintaining the restraint state of battery cell 10 in the stacking direction of battery cells 10.

### (Holding Structure for Battery Cells 10 in Battery Module 1)

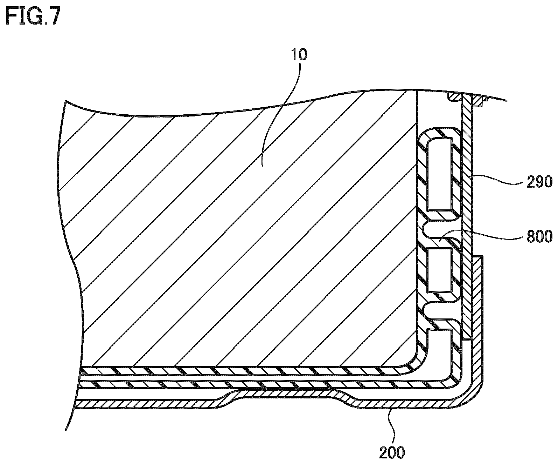

Next, a holding structure for battery cells 10 in battery module 1 will be described with reference to Figs. 2, 3, 5, 6, and 7. Fig. 7 is an enlarged view of a region surrounded as VII in Fig. 5.

Referring to Figs. 2 and 3, first cushion 710 is provided at a corner portion of battery module 1 located on one side of the upper surface on which electrode terminals 11 are disposed, so as to extend along the Y direction. Further, second cushion 720 is provided at a corner portion of battery module 1 located on the other side of the upper surface, so as to extend in the Y direction.

Each of first cushion 710 and second cushion 720 may be provided to cover the corner portions of at least two or more battery cells 10. In the present embodiment, one corner portion of each of all the 24 battery cells 10 is covered with one cushion.

Referring to Fig. 6, the following describes configurations of first cushion 710 and second cushion 720. Since first cushion 710 and second cushion 720 have the same configuration, the configuration of second cushion 720 will be described here.

Second cushion 720 is constituted of a resin-molded product, and is provided to cover the corner portions of battery cells 10. Second cushion 720 is in abutment with the inner surfaces of first main body plate portion 110 and first peripheral wall portion 120.

As shown in Fig. 7, cooling device 800, which is constituted of a resin-molded product and has elasticity, functions as a cushion on the second binding bar 200 side. A plurality of hollow regions (coolant paths) are formed in cooling device 800, and cooling device 800 has a function of cooling battery cells 10 by allowing the coolant to pass through the hollow regions.

As shown in Fig. 5, in first binding bar 100 and second binding bar 200, first extension plates 190 provided at first peripheral wall portion 120 and second extension plates 290 provided at second peripheral wall portion 220 are fastened and fixed to third coupling plate 430 (on the left side of the shown cross section) and fourth coupling plate 440 (on the right side of the shown cross section) by using rivets RB. On this occasion, first binding bar 100 and second binding bar 200 are fixed in the state in which the external forces for bringing them closer to each other are applied thereto.

As a result, first cushion 710 and second cushion 720 on the first binding bar 100 side are pressed against the corner portions of battery cells 10. Similarly, cooling device 800 on the second binding bar 200 side is pressed against the corner portions of battery cells 10.

Since each of first cushion 710, second cushion 720, and cooling device 800 is a hollow resin-molded product, a reaction force (elastic force) is generated when compressed. As a result, based on cushioning actions of first cushion 710, second cushion 720, and cooling device 800, battery cells 10 can be stably held inside battery module 1.

Each of first cushion 710 and second cushion 720 may be fixed to the inner surface of first binding bar 100 by a double-sided tape, an adhesive agent, a rivet, a screw, heat swaging, or the like. On the other hand, first cushion 710 and second cushion 720 are only in contact with battery cells 10 and are not fixed thereto.

Cooling device 800 may be fixed to the inner surface of second binding bar 200 by a double-sided tape, an adhesive agent, a rivet, a screw, heat swaging, or the like. On the other hand, cooling device 800 is only in contact with battery cells 10 and is not fixed thereto.

With this configuration, when a battery cell 10 is expanded, battery cell 10 can be slid in contact with first cushion 710, second cushion 720, and cooling device 800 in the Y direction of battery cell 10.

By employing the holding structure for battery cells 10 using first cushion 710, second cushion 720, and cooling device 800 described above, a holding area for battery cells 10 is increased, thereby reducing contact load (concentration of the contact load) on battery cells 10. As a result, a holding force for battery cells 10 per unit area can be reduced.

Further, since first cushion 710 and second cushion 720 are disposed in a clearance formed between first binding bar 100 and each battery cell 10 and cooling device 800 is disposed in a clearance formed between second binding bar 200 and each battery cell 10, the height of battery module 1 in the Z direction can be low while increasing the holding force for battery cells 10.

In the present embodiment, cooling device 800 is also used as the cushion on the second binding bar 200 side, but a cushion having the same configuration as that of each of first cushion 710 and second cushion 720 may be employed as the cushion on the second binding bar 200 side.

### (Structure of Collective Terminal Base 600)

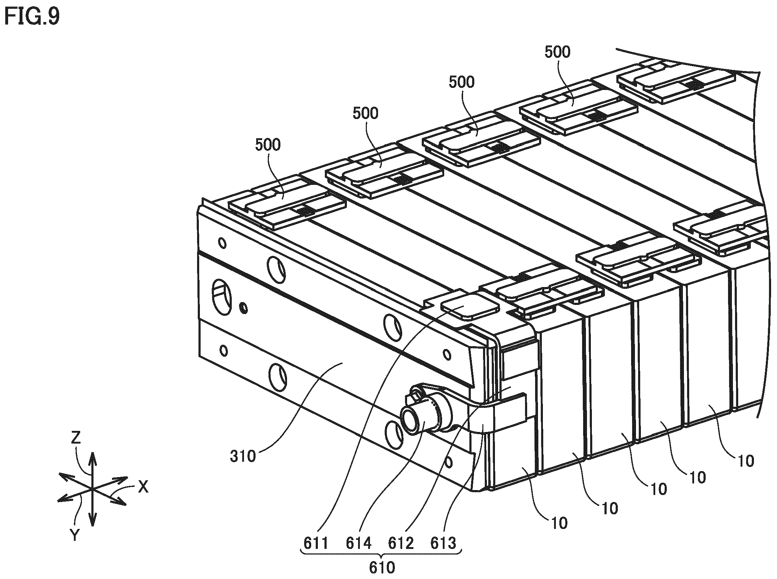

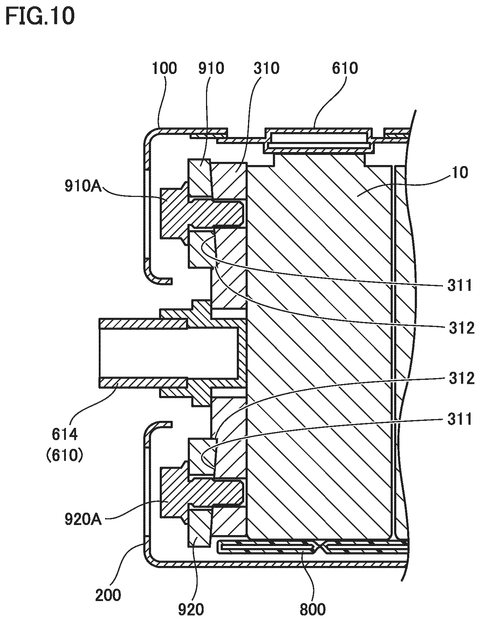

Next, referring to Figs. 8 to 10, a structure of each of the collective terminal bases provided at the side surface end portions (both end portions in the Y direction) of battery module 1 will be described. Fig. 8 is a perspective view showing the configuration of collective terminal base 600, Fig. 9 is a perspective view showing the configuration of first collective terminal base 610 in a state in which first binding bar 100 and second binding bar 200 are detached from battery module 1 in Fig. 8, and Fig. 10 is a cross sectional view (cross section extending through collective terminal base 600) taken along a line X-X in Fig. 8.

First collective terminal base 610 is provided on the one end portion side of battery module 1 located in the stacking direction (Y direction), and second collective terminal base 620 is provided on the other end portion side of battery module 1 located in the stacking direction (Y direction). Since the configurations of first collective terminal base 610 and second collective terminal base 620 are symmetrical at the side surface end portions facing each other, the configuration of first collective terminal base 610 will be described below.

In the present embodiment, a configuration in which collective terminal base 600 is provided on each of the first end plate 310 side and the second end plate 320 side is shown, but a configuration in which collective terminal base 600 is provided on one of the end plate sides may be employed.

As shown in Fig. 9, first collective terminal base 610 including a connection portion 614 coupled to an external connection member is joined to electrode terminal 11 of battery cell 10 that is in contact with first end plate 310. Connection portion 614 is provided on a surface of first end plate 310 opposite to its surface that is in contact with battery cell 10.

First collective terminal base 610 includes: a connection terminal 611 connected to electrode terminal 11; a first extension terminal 612 extending from connection terminal 611 to the side surface side of battery cell 10; and a second extension terminal 613 extending from first extension terminal 612 to the surface of first end plate 310 opposite to the surface that is in contact with battery cell 10. Connection portion 614 is provided to be connected to second extension terminal 613.

By employing the configuration in which first collective terminal base 610 and second collective terminal base 620 are disposed at the side surface end portions (both end portions in the Y direction) of battery module 1, it is possible to employ a configuration in which many of the components of the collective terminal bases can be fixed to the side surfaces, on the X direction side, of the plurality of stacked battery cells 10 and to the end plates. As a result, the height of battery module 1 in the Z direction can be low.

### (Restraint Structure for Battery Cells 10)

Next, features of the restraint structure for battery cells 10 by first binding bar 100 and second binding bar 200 will be described with reference to Figs. 10 to 12.

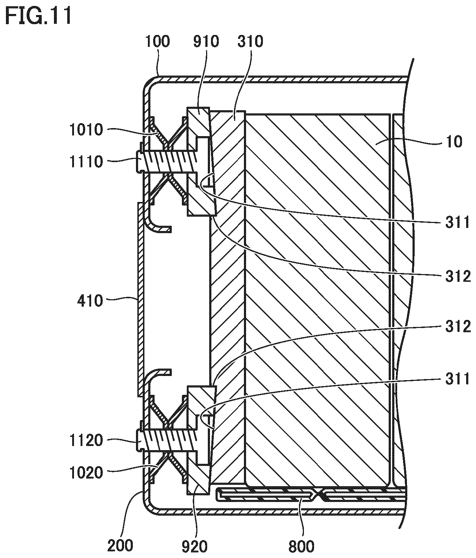

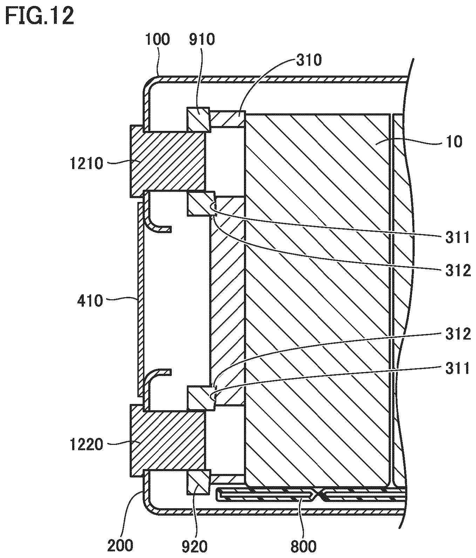

Figs. 11 and 12 newly referred to are respectively a cross sectional view taken along a line XI-XI (cross section extending through retainers 1110, 1120) and a cross sectional view taken along a line XII-XII (cross section extending through guide members 1210, 1220).

Since the same restraint structures are provided on the first end plate 310 side and the second end plate 320 side in battery module 1 according to the present embodiment, the structure on the first end plate 310 side will be described below.

As shown in Figs. 10 to 12, first end plate 310 includes tapered surfaces 311 and stepped portions 312. Contact plates 910, 920 are provided in abutment with tapered surfaces 311 and stepped portions 312.

As shown in Fig. 10, contact plates 910, 920 are fixed to first end plate 310 by bolts 910A, 920A, respectively. Connection portion 614 is provided between first binding bar 100 and second binding bar 200, which are separated from each other in the Z direction.

As shown in Fig. 11, an elastic member 1010 is provided between contact plate 910 and first binding bar 100, and an elastic member 1020 is provided between contact plate 920 and second binding bar 200.

Moreover, contact plate 910 is coupled to first binding bar 100 by a retainer 1110, and contact plate 920 is coupled to second binding bar 200 by a retainer 1120.

For the restraint by first binding bar 100 and second binding bar 200, bolts 910A, 920A are fastened in a state in which compression force in the Y direction is applied to the stack of battery cells 10, thereby fixing first binding bar 100 and second binding bar 200 to the stack of battery cells 10 via contact plates 910, 920 and retainers 1110, 1120. Thereafter, the compression force in the Y direction as applied to the stack of battery cells 10 is released, with the result that tensile stress is generated in each of first binding bar 100 and second binding bar 200 and compression force (restraint load) is applied to the stack of battery cells 10 as a reaction thereto.

When a battery cell 10 is expanded, the tensile stress of each of first binding bar 100 and second binding bar 200 and the restraint load serving as the reaction thereto are increased. Since elastic members 1010, 1020 (elastic mechanisms) are disposed as shown in Fig. 11, the expansion force of battery cell 10 can be absorbed to stabilize the restraint load.

Moreover, when battery cell 10 is expanded, forces in directions for bringing contact plates 910, 920 closer to each other in the Z direction are exerted on contact plates 910, 920 by the actions of tapered surfaces 311 formed in first end plate 310. With stepped portions 312 formed in first end plate 310, relative positional deviation of each of contact plates 910, 920 with respect to first end plate 310 can be suppressed. Although the suppression of the positional deviation in the Z direction has been described here, the same structure can be provided also in the X direction.

As shown in Fig. 12, guide member 1210 is inserted into first binding bar 100 and contact plate 910 along the Y direction. Guide member 1220 is inserted into second binding bar 200 and contact plate 920 along the Y direction. Guide members 1210, 1220 are movable in the Y direction with respect to contact plates 910, 920.

With guide member 1210, first binding bar 100 and contact plate 910 are positioned relative to each other in the X direction and the Z direction. With guide member 1220, second binding bar 200 and contact plate 920 are positioned relative to each other in the X direction and the Z direction.

Therefore, first end plate 310 is permitted to be moved in the Y direction in response to the expansion of battery cell 10, but the relative positional deviation between first end plate 310 and each of first binding bar 100 and second binding bar 200 in each of the X direction and the Z direction is suppressed. Regarding this point, the same applies to second end plate 320.

Thus, according to battery module 1 of the present embodiment, the restraint load for each of battery cells 10 can be stabilized, and the relative positional deviation between each of first end plate 310 and second end plate 320 and each of first binding bar 100 and second binding bar 200 in each of the X direction and the Z direction can be suppressed.

Battery module 1 (battery assembly) described above includes: the plurality of battery cells 10 arranged in the Y direction (first direction); and first binding bar 100 and second binding bar 200 (restraint member) that restrain the plurality of battery cells 10 in the Y direction. Each of the plurality of battery cells 10 has electrode terminal 11 on one side (upper side) in the Z direction (second direction) orthogonal to the Y direction. First binding bar 100 and second binding bar 200 are a pair of members provided to sandwich the plurality of battery cells 10 in the Z direction. First binding bar 100 and second binding bar 200 are provided to be separated from each other in the Z direction.

Since the pair of first binding bar 100 and second binding bar 200 are thus provided to sandwich battery cells 10 in the Z direction (second direction), first binding bar 100 and the installation portions for bus bars 500 can be integrated, with the result that the number of components can be reduced as compared with a structure in which a member (bus bar module) for installation of bus bars 500 is provided in addition to first binding bar 100.

Since the pair of first binding bar 100 and second binding bar 200 are separated from each other in the Z direction (second direction), a degree of freedom in disposing another member (for example, collective terminal base 600 or the like) in the clearance therebetween is increased. Therefore, first binding bar 100 and second binding bar 200 can be readily attached and detached as compared with a structure in which the pair of members are combined with each other without a clearance therebetween. As a result, there can be obtained battery module 1 in which an individual battery cell 10 can be readily replaced.

In the present embodiment, battery cell 10 having electrode terminals 11 on one side in the Z direction has been illustratively described; however, the scope of the present technology is not limited thereto, and a battery cell having electrode terminals 11 on both sides in the X direction may be used, for example. In this case, the X direction constitutes the "second direction", and the pair of binding bars (restraint member) are provided to sandwich the plurality of battery cells in the X direction.

Further, in battery module 1 according to the present embodiment, battery cell 10 has a rectangular shape with a short-side direction corresponding to the Z direction (second direction) and a long-side direction corresponding to the X direction (third direction) when viewed in the Y direction. First binding bar 100 and second binding bar 200 are provided to sandwich the plurality of battery cells 10 in the Z direction.

Since the stack is thus restrained at the long sides of the plurality of battery cells 10, rather than the short sides thereof, it is possible to suppress increased moment load exerted on each of first binding bar 100 and second binding bar 200 even when an expansion force is generated in each of battery cells 10.

### (Supplement)

In the present embodiment, it has been illustratively described that first end plate 310 and second end plate 320 are provided at both the end portions of the stack of the plurality of battery cells 10 in the Y direction, but the scope of the present technology is not limited thereto.

In the present embodiment, it has been illustratively described that the plurality of battery cells 10 are electrically connected in the state in which bus bars 500 are fixed to first binding bar 100 and are not fixed to electrode terminals 11 of battery cells 10, but the scope of the present technology is not limited thereto.

In the present embodiment, it has been illustratively described that the cooling device (cooling member) composed of the resin is provided in direct abutment with the plurality of battery cells 10 and the coolant path is formed therein. As shown in Fig. 8, an inflow portion 811 and an outflow portion 812 for the coolant in the coolant path are disposed between first binding bar 100 and second binding bar 200 in the Z direction. However, the scope of the present technology is not limited thereto.

Although the embodiments of the present invention have been described and illustrated in detail, it is clearly understood that the same is by way of illustration and example only and is not to be taken by way of limitation. The scope of the present invention is defined by the terms of the claims, and is intended to include any modifications within the scope and meaning equivalent to the terms of the claims.

## Claims

1. A battery assembly comprising:
a plurality of battery cells (10) arranged in a first direction; and
a restraint member (100, 200) that restrains the plurality of battery cells (10) in the first direction, wherein
I) each of the plurality of battery cells (10) has an electrode terminal (11) on at least one side in a second direction orthogonal to the first direction,
the restraint member (100, 200) includes a pair of members (100, 200) provided to sandwich the plurality of battery cells (10) in the second direction, and
the pair of members (100, 200) are provided to be separated from each other in the second direction, or
II) each of the plurality of battery cells (10) has a rectangular shape with a short-side direction corresponding to the second direction orthogonal to the first direction and a long-side direction corresponding to a third direction orthogonal to the first direction and the second direction when viewed in the first direction, and
the restraint member (100, 200) includes a pair of members (100, 200) provided to sandwich the plurality of battery cells (10) in the second direction.

2. The battery assembly according to claim 1, further comprising an end plate (310, 320) provided at each of respective end portions of a stack of the plurality of battery cells (10) in the first direction.

3. The battery assembly according to claim 2, further comprising an elastic mechanism (1010, 1020) provided between the restraint member (100, 200) and the end plate (310, 320).

4. The battery assembly according to any one of claims 1 to 3, further comprising a bus bar (500) that electrically connects the plurality of battery cells (10), wherein
the bus bar (500) electrically connects the plurality of battery cells (10) in a state in which the bus bar (500) is fixed to the restraint member (100, 200) and is not fixed to the plurality of battery cells (10).

5. The battery assembly according to any one of claims 1 to 4, further comprising a cooling member (800) composed of a resin and provided in direct abutment with the plurality of battery cells (10), wherein
the cooling member (800) is provided between the restraint member (100, 200) and each of the plurality of battery cells (10).

6. The battery assembly according to claim 5, wherein
a coolant path is provided in the cooling member (800), and
an inflow portion (811) and an outflow portion (812) for a coolant in the coolant path are disposed between the pair of members (100, 200).

7. A battery pack comprising: the battery assembly (1) according to any one of claims 1 to 6.
